# EUROPÄISCHE PATENTSCHRIFT

(11) **EP 1 000 684 B1**
(45) Veröffentlichungstag und Bekanntmachung des Hinweises auf die Patenterteilung: **05.12.2001**
(21) Anmeldenummer: 99119882.1
(22) Anmeldetag: 07.10.1999
(51) Int. Cl.: B21D 43/05, B21D 55/00

(54) **Vorschubeinrichtung zum schrittweisen Werkstücktransport in Produktionsmaschinen**
Transport device for stepwise transport of workpieces in a production machine
Dispositif de transfert pour le transport pas à pas des pièces à travailler dans une machine

(30) Priorität: 17.10.1998 DE 19847973
(43) Veröffentlichungstag der Anmeldung: 17.05.2000
(73) Patentinhaber: GPA -Jakob GmbH & Co. Pressenautomation KG, 76220 Karlsruhe (DE)
(72) Erfinder: Braun, Eduard, 63839 Alzenau (DE); Tanner, Othmar, 76275 Ettlingen (DE)
(74) Vertreter: Rapp, Bertram, Dr.

(56) Entgegenhaltungen:
- DE-A- 4 422 719
- US-A- 5 473 927

## Beschreibung

Die Erfindung betrifft eine Vorschubeinrichtung zum schrittweisen Werkstücktransport in Produktionsmaschinen, insbesondere in Pressen, mit zwei sich in Vorschubrichtung erstreckenden, parallel und in Abstand zueinander angeordneten Transportschienen, die mittels entsprechender Antriebe in Vorschubrichtung gemeinsam hin- und her-, sowie in einer Querrichtung dazu gegenläufig bewegbar sind, und mit mindestens einer parallel zu der ersten Transportschiene angeordneten und mit dieser verbundenen Hilfsschiene, die mehrere in Vorschubrichtung in gleichen Mittenabständen voneinander angeordnete Greifer trägt, von denen jeder mit jeweils einem der zweiten Transportschiene zugeordneten, gegenüberliegenden Greifer zum Erfassen eines Werkstückes zusammenwirkt.

Bei bekannten Vorschubeinrichtungen zum schrittweisen Werkstücktransport dieser Art (vgl. Firmenschrift "IWK Greifer-Transfer-Einrichtungen" der Firma IWK Pressen GmbH, Kassel-Lohfelden, sind an jeder der beiden Transportschienen hintereinander mehrere Hilfsschienen angeordnet, von denen jede mehrere Greifer trägt. Die Hilfsschienen sind mittels Schrauben lösbar mit den Transportschienen verbunden. Sie dienen damit zum raschen Auswechseln der Greifer, wenn die Vorschubeinrichtung zum Transport anders geformter Werkstücke umgerüstet werden soll. Nach dem Lösen einiger weniger Schrauben oder auch von Schnellverschlüssen kann eine Hilfsschiene, die mehrere Greifer trägt, von der Transportschiene abgenommen und gegen eine Hilfsschiene mit anders geformten Greifern ausgetauscht werden. Es braucht also nicht jeder Greifer einzeln ausgewechselt zu werden. Da außerdem die Greifer zuvor gegenüber den Hilfsschienen ausgerichtet sind, bleibt ihre Ausrichtung auch nach der Abnahme der Hilfsschiene bis zur erneuten Befestigung derselben an der Transportschiene erhalten.

Eine weitere Vorschubeinrichtung, gemäß Oberbegriff vom Anspruch 1, ist der DE-A-4 422 719 zu entnehmen.

Bei Vorschubeinrichtungen dieser Art muß jedoch auch dafür Sorge getragen werden, daß die Transportelemente und Antriebe sowie die Greifer beim Bruch oder bei Fehlplazierung eines Werkstückes oder auch bei Falscheinstellung vor Überlastung geschützt werden. Bei bekannten CNC-Vorschubeinrichtungen wird ein Überlastungsschutz dadurch geschaffen, daß man das Antriebsmoment des Motors des Querantriebes über eine Strombegrenzung in gewissen Grenzen hält, oder eine Schleppabstandskontrolle vorsieht, welche die Anlage bei Abweichung von der Soll- Bewegung abschaltet. Eine derartige Schleppabstandskontrolle ist schwierig zu justieren. Der Überlastungsschutz durch Strombegrenzung spricht häufig zu spät an, weil wegen der auch beim Normalbetrieb auftretenden Stromspitzen der Strombegrenzer relativ hoch eingestellt werden muß. Im übrigen ergibt sich auch nach dem Abschalten des Antriebsmotors ein gewisser Nachlauf der Anlage, der trotz Abschaltens des Antriebes zu einer Überlastung der Anlage führen kann.

Der Erfindung liegt daher die Aufgabe zugrunde, eine Vorschubeinrichtung zum schrittweisen Werkstücktransport zu schaffen, die einen konstruktiv einfachen und sicher funktionierenden Überlastungsschutz aufweist.

Dies wird nach der Erfindung durch die Kombination von Merkmalen nach Anspruch 1 erreicht.

Der bei dieser Vorschubeinrichtung vorgesehene Überlastungsschutz ist relativ einfach im Aufbau und damit kostengünstig herstellbar. Die Führungseinrichtung zur verschiebbaren Lagerung der Hilfsschiene gegenüber der Tragschiene kann verhältnismäßig einfach und ohne allzu hohe Genauigkeitsanforderungen ausgebildet sein, denn eine Relativbewegung der Hilfsschiene gegenüber der Transportschiene findet nur im Störfall statt. Als Federanordnungen können einfache Tellerfedern verwendet werden und die Sensoreinrichtung kann ein einfacher Endschalter sein. Darüber hinaus arbeitet der neue Überlastungsschutz rasch und zuverlässig, weil ein Crash oder eine Fehleinstellung der Greifer unmittelbar zu einer Relativverschiebung der Hilfsschiene gegenüber der Transportschiene und damit zu einem Abschalten des Querantriebes bzw. auch zum Abschalten der gesamten Anlage führen. Auch ein eventueller Nachlauf (Bremsweg) des Querantriebes kann nicht zu einer Überlastung der Bauteile der Vorschubeinrichtung führen. Im Verlauf des Bremsweges kann sich nämlich die Hilfsschiene weiterhin relativ zur Transportschiene bewegen, wobei nur die Federkraft der Federanordnung noch etwas ansteigt.

Vorteilhafte Ausgestaltungen der Erfindung sind in den Unteransprüchen gekennzeichnet.

Die Erfindung wird in folgendem, anhand eines in der Zeichnung dargestellten Ausführungsbeispieles näher erläutert. Es zeigen:

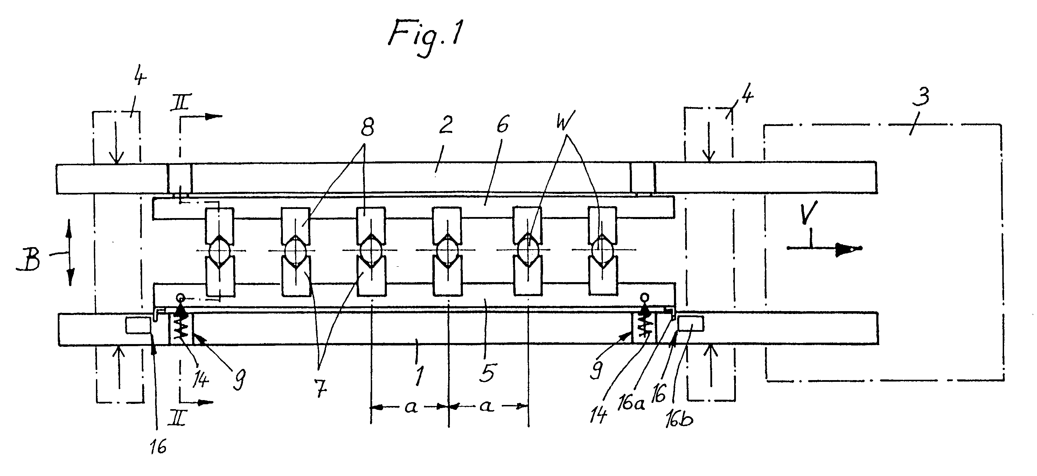

- Fig. 1: eine Draufsicht auf die Vorschubeinrichtung in schematischer Darstellung,
- Fig. 2: einen Querschnitt nach der Linie II-II der Fig. 1.

In der Zeichnung sind mit 1 und 2 zwei horizontal, parallel und in Abstand zueinander angeordnete Transportschienen bezeichnet. Diese Transportschienen 1, 2 sind mittels des Vorschubantriebes 3 in Vorschubrichtung V hin- und herbeweglich. Ferner sind sie mittels der beiden Querantriebe 4 quer zur Vorschubrichtung, d.h. quer zu ihrer Längsrichtung, in Querrichtung B gegenläufig bewegbar. Parallel zur ersten Transportschiene 1 erstreckt sich eine erste Hilfsschiene 5, die gegenüber der ersten Transportschiene in Querrichtung B verschiebbar angeordnet ist. Beim gezeigten, vorteilhaften Ausführungsbeispiel erstreckt sich parallel zur zweiten Transportschiene 2 eine zweite Hilfsschiene 6, die in diesem Fall starr, jedoch leicht lösbar mit der zweiten Transportschiene 2 verbunden ist. Die erste Hilfsschiene 1 trägt mehrere, in Vorschubrichtung in gleichen Mittenabständen a voneinander angeordnete Greifer 7. An der zweiten Hilfsschiene sind gegenüberliegend zu den Greifern 7 mehrere Greifer 8 angeordnet. Jeder der Greifer 7 wirkt zum Erfassen eines Werkstückes W mit einem der gegenüberliegenden Greifer 8 zusammen. Gegebenenfalls könnten die Greifer 8 auch unmittelbar mit der zweiten Transportschiene 2 verbunden sein.

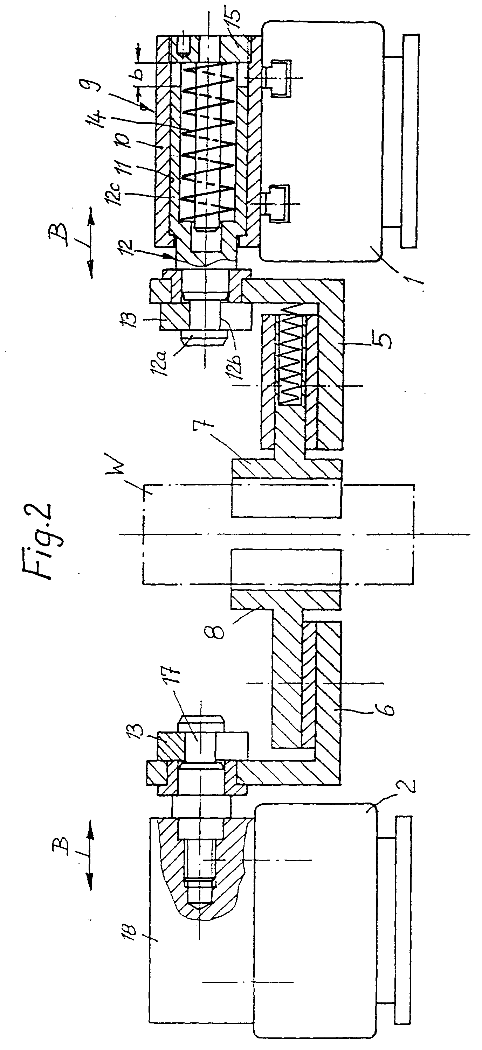

Zur verschiebbaren Lagerung der ersten Hilfsschiene 5 gegenüber der ersten Transportschiene 1 sind zwei Führungseinrichtungen 9 vorgesehen, die gleichartig ausgebildet sind. Jeder der beiden Führungseinrichtungen 9 weist gemäß Figur 2 ein Lagergehäuse 10 auf, welches mit der zugehörigen ersten Transportschiene 1 mittels Schrauben verbunden ist. Das Lagergehäuse 10 weist eine zweckmäßig zylindrische Bohrung 11 auf, in welcher eine vorteilhaft ebenfalls zylindrische Führungsstange 12 in Querrichtung B verschiebbar angeordnet ist. Das aus dem Lagergehäuse 10 herausragende Ende 12a der Führungsstange 12 ist lösbar mit der Hilfsschiene 5 verbunden. Zum lösbaren Verbinden kann am Ende 12a beispielsweise ein Gewinde vorgesehen sein, auf welches eine Mutter aufgeschraubt ist. Es kann jedoch auch ein Schnellverschluß vorgesehen sein, der aus einem an der Hilfsschiene 5 schwenkbar gelagerten Verriegelungshebel 13 besteht, welcher in ein im Durchmesser verjüngtes Teil 12b des Endes 12a eingreift. Durch Hochschwenken des Verriegelungshebels 13 kann die Verbindung zwischen Hilfsschiene 5 und Führungsstange 12 gelöst werden. Der vom Lagergehäuse 10 umschlossene Teil 12c der Führungsstange 12 ist zweckmäßig hohl ausgebildet. Eine Federanordnung 14, z.B. mehrere Tellerfedern oder eine Schraubenfeder, greift in den hohlen Teil 12a der Führungsstange 12 ein. Hierdurch wird eine besonders gedrängte Bauart der Führungseinrichtung mit integrierter Federanordnung geschaffen. Die Federanordnung 14 ist mittels der in das Lagergehäuse 10 eingeschraubten Mutter 15 mit einer vorbestimmten Vorspannkraft vorgespannt. Die Summe der Vorspannkräfte der beiden Federanordnungen 14 wird als Gesamtvorspannkraft bezeichnet, ebenso wie die Summe aller der Hilfsschiene 5 zugeordneter Greifer als Gesamtgreifkraft bezeichnet wird. Die Gesamtvorspannkraft der beiden Federanordnungen 14 muß größer sein als die Gesamtgreifkraft und kleiner als eine Überlastkraft, die zu einer Überlastung von Teilen der Vorschubeinrichtung, z.B. einer Überlastung der Transportschienen 1, 2 und/oder der Querantriebe oder auch der Greifer 7, 8 führen könnte. Die Gesamtvorspannkraft sollte um etwa 20 bis 30% größer sein als die Gesamtgreifkraft. Je nach Länge der Transportschiene 1 können auch mehrere Hilfsschienen 5 hintereinander angeordnet sein, die jeweils in der gleichen Weise gelagert sind wie es vorstehend beschrieben wurde.

Ferner sind zwischen der Hilfsschiene 5 und der Transportschiene 1 zwei Sensoreinrichtungen 16 vorgesehen, die jeweils z.B. aus einer mit der Hilfsschiene 5 verbundenen Schaltfahne 16a und einem mit dieser zusammenwirkenden Endschalter 16b bestehen. Jeder der beiden Endschalter wirkt auf die Querantriebe 4 so ein, daß bei Relativverschiebung der Hilfsschiene 5 gegenüber der ersten Transportschiene 1 eine Stillsetzung zumindest des Querantriebes 4 oder wenn, wie beim gezeigten Ausführungsbeispiel, zwei Querantriebe vorgesehen sind, beider Querantriebe bewirkt wird. Mit dem Stillsetzen der Querantriebe ist ein Stillsetzen der gesamten Anlage verbunden, da die Querantriebe in eine Folgesteuerung eingebunden sind.

Zum schrittweisen Werkstücktransport werden die von jeweils zwei einander gegenüberliegenden Greifern 7, 8 erfaßten Werkstücke W durch gleichzeitige Bewegung der beiden Transportschienen 1, 2 in Richtung V weiterbewegt, bis alle Werkstücke jeweils eine vorbestimmte Position in einer von mehreren hintereinander angeordneten Preßstationen erreicht hat. Wenn dies geschehen ist, werden mittels der Querantriebe 4 die beiden Transportschienen 1, 2 auseinandergefahren, so daß die Greifer 7, 8 die Werkstücke W freigeben. Während die Werkstücke in den verschiedenen Preßstationen gleichzeitig gepreßt werden, werden die Transportschienen 1, 2 entgegen der Vorschubrichtung V mittels des Vorschubantriebes 3 in ihre Ausgangsstellung zurückbewegt. Nach Beendigung der Preßvorgänge werden die Transportschienen 1, 2 mittels der Querantriebe 4 in Richtung B aufeinander zubewegt. Wenn nun ein Greifer 7, 8 nicht richtig eingestellt ist, oder ein Werkstück W nicht in der richtigen Position ist, stoßen die im Bereich dieses Werkstückes liegenden Greifer vorzeitig auf dieses Werkstück. Dies führt dazu, daß die Hilfsschiene 5 bei dem weiteren Aufeinanderzubewegen der Transportschienen 1, 2 sich gegenüber der Transportschiene entgegen der Vorspannkraft der Federanordnungen 14 verschiebt. Die Führungsstangen 12 werden dabei weiter in das Lagergehäuse 10 hineingeschoben. Durch die Verschiebung der Hilfsschiene 5 gegenüber der Transportschiene 1 verschieben sich auch die Schaltfahnen 16a gegenüber den Endschaltern 16b. Die Endschalter 16b setzen über einen nicht dargestellten Schaltkreis die Querantriebe 4 und damit die gesamte Anlage still. Vom Beginn des Abschaltens der Antriebsmotoren der Querantriebe 4 bis zum Erreichen des Stillstandes werden die beiden Transportschienen 1, 2 noch um einen gewissen Nachlauf oder Bremsweg aufeinander zubewegt. Hierbei werden die Federanordnungen 14 noch weiter zusammengedrückt. Sie verhindern auf diese Weise dank ihrer Nachgiebigkeit eine Überlastung der Bauelemente der Vorschubeinrichtung. Der gesamte Federweg der Federanordnung und der Verschiebeweg der Führungsstange muß größer sein als die Summe von Schaltweg, um den sich die Hilfsschiene 5 zu der Transportschiene 1 hin verschiebt, bis der Endschalter 16b das Abschalten des Querantriebsmotores bewirkt, und dem Nachlaufweg, den die beiden Transportschienen 1, 2 aufeinander zu zwischen dem Abschalten und dem endgültigen Stillstand des Querantriebsmotores zurücklegen. Die Maße der zweiten Hilfsschiene 6 und ihrer Verbindungsmittel 13, 17 mit der zweiten Transportschiene 2 sollte den Maßen der ersten Hilfsschiene 5 und ihrer Verbindungsmittel 12a, 13 entsprechen, um die Produktion zu vereinfachen. Der Tragbolzen 17 ist jedoch fest in das Gehäuse 18 eingeschraubt.

## Patentansprüche

1. Vorschubeinrichtung zum schrittweisen Werkstücktransport in Produktionsmaschinen, insbesondere Pressen, mit zwei sich in Vorschubrichtung erstreckenden, parallel und in Abstand zueinander angeordneten Transportschienen (1), die mittels entsprechender Antriebe in Vorschubrichtung gemeinsam hin- und her-, sowie in einer Querrichtung dazu gegenläufig bewegbar sind, und mit mindestens einer parallel zu der ersten Transportschiene (1) angeordneten und mit dieser verbundenen Hilfsschiene (5), die mehrere in Vorschubrichtung in gleichen Mittenabständen voneinander angeordnete Greifer (7) trägt, von denen jeder mit jeweils einem der zweiten Transportschiene zugeordneten, gegenüberliegenden Greifer (7) zum Erfassen eines Werkstückes zusaminenwirkt, wobei die Hilfsschiene (5) gegenüber der ersten Transportschiene (1) in Querrichtung (B) verschiebbar angeordnet ist, und zwischen Transportschiene (1) und Hilfsschiene (5) mehrere in Querrichtung (B) wirksame, vorgespannte Federanordnungen (14) vorgesehen sind, **dadurch gekennzeichnet, daß** die gemeinsame Gesamtvorspannkraft der Federanordnungen (14) größer ist als die Gesamtgreifkraft aller an der Hilfsschiene (5) angeordneter Greifer (7) und kleiner ist als eine Überlastkraft, die zu einer Überlastung von Teilen der Vorschubeinrichtung führen könnte, und daß mindestens eine auf eine bei Überschreiten der Vorspannkraft einer Federanordnung (14) eintretende Relativverschiebung der Hilfsschiene (5) gegenüber der Transportschiene (1) ansprechende Sensoreinrichtung (16) vorgesehen ist, die bei einer solchen Relativverschiebung zumindest eine Stillsetzung des Querantriebens (4) bewirkt.

2. Einrichtung nach Anspruch 1, **dadurch gekennzeichnet, daß** zur verschiebbaren Lagerung der Hilfsschiene (5) gegenüber der Transportschiene (1) zwei Führungseinrichtungen (9) vorgesehen sind, von denen jede ein mit der Transportschiene (1) verbundenes Lagergehäuse (10) und eine in diesem quer zur Transportschiene (1) verschiebbare Führungsstange (12) aufweist, deren aus dem Lagergehäuse (10) herausragendes eines Ende (12a) lösbar mit der Hilfsschiene (5) verbunden ist.

3. Einrichtung nach Anspruch 2, **dadurch gekennzeichnet, daß** in dem Lagergehäuse (10) die vorgespannte Federanordnung (14) angeordnet ist und auf die Führungsstange (12) eine zu den Greifern (7) hin gerichtete Vorspannkraft ausübt.

4. Einrichtung nach Anspruch 3, **dadurch gekennzeichnet, daß** der vom Lagergehäuse (10) umschlossene Teil (12c) einer zylindrischen Führungsstange (12) hohl ausgebildet ist und die Federanordnung (14) in diesen hohlen Teil (12c) eingreift.

5. Einrichtung nach einem der vorhergehenden Ansprüche, **dadurch gekennzeichnet, daß** die Federanordnung (14) aus mehreren Tellerfedern besteht.

6. Einrichtung nach einem der vorhergehenden Ansprüche, **dadurch gekennzeichnet, daß** der Federweg der Federanordnung (14) und der Verschiebeweg der Führungsstange (12) größer sind als die Summe von Schaltweg und Nachlaufweg der Transportschienen (1, 2) in Querrichtung.

7. Einrichtung nach einem der vorhergehenden Ansprüche, **dadurch gekennzeichnet, daß** parallel zur zweiten Transportschiene (2) eine zweite Hilfsschiene (6) angeordnet ist und lösbar mit dieser verbunden ist, welche die der zweiten Transportschiene (2) zugeordneten Greifer (8) trägt.

8. Einrichtung nach Anspruch 7, **dadurch gekennzeichnet, daß** die zweite Hilfsschiene (6) mit der zweiten Transportschiene (2) starr verbunden ist.

9. Einrichtung nach Anspruch 1, **dadurch gekennzeichnet, daß** die Gesamtvorspannkraft um etwa 20 bis 30% größer ist als die Gesamtgreifkraft.

## Claims

1. Feeding device for progressive transport of work pieces in production machines, in particular presses, with two transport rails (1) which extend in the feeding direction and are arranged parallel and at a distance to one another and are moveable together to and fro in the feeding direction and in opposite directions in a transverse direction thereto by means of corresponding drives, and with at least one auxiliary rail (5) which is arranged parallel to the first transport rail (1) and connected to the latter and carries a plurality of grippers (7) which are arranged with their centres equally spaced in the feeding direction and each of which co-operates with a facing gripper (7) associated with the second transport rail to grasp a work piece, whereby the auxiliary rail (5) is arranged displaceable relative to the first transport rail (1) in the transverse direction (B) and a plurality of preloaded spring arrangements (14) acting in the transverse direction (B) are provided between the transport rail (1) and the auxiliary rail (5), **characterised in that** the overall preloading force of the spring arrangements (14) is greater than the overall gripping force of all the grippers (7) arranged on the auxiliary rail (5) and less than an overloading force which could lead to overloading of parts of the feeding device, and **in that** at least one sensor device (16) is provided which responds to a relative displacement of the auxiliary rail (5) relative to the transport rail (1) occurring when the preloading force of a spring arrangement (14) is exceeded, and causes at least immobilisation of the transverse drive (4) in the event of such a relative displacement.

2. Device according to claim 1, **characterised in that** for displaceable mounting of the auxiliary rail (5) relative to the transport rail (1) two guiding devices (9) are provided which each exhibit a bearing housing (10) which is connected to the transport rail (1), and a guide rod (12) which is displaceable transversely to the transport rail (1) in the bearing housing and the end (12a) of which projecting out of the bearing housing (10) is connected detachably to the auxiliary rail (5).

3. Device according to claim 2, **characterised in that** the preloaded spring arrangement (14) is arranged in the bearing housing (10) and exerts a preloading force on the guide rod (12) in the direction of the grippers (7).

4. Device according to claim 3, **characterised in that** the part (12c) of a cylindrical guide rod (12) surrounded by the bearing housing (10) is hollow and the spring arrangement (14) engages in this hollow part (12c).

5. Device according to one of the preceding claims, **characterised in that** the spring arrangement (14) consists of a plurality of disc springs.

6. Device according to one of the preceding claims, **characterised in that** the spring travel of the spring arrangement (14) and the displacement travel of the guide rod (12) are greater than the sum of the switching travel and the run-on travel of the transport rails (1,2) in the transverse direction.

7. Device according to one of the preceding claims, **characterised in that** a second auxiliary rail (6) is arranged parallel to the second transport rail (2) and is connected detachably to the latter and carries the grippers (8) associated with the second transport rail (2).

8. Device according to claim 7, **characterised in that** the second auxiliary rail (6) is connected rigidly to the second transport rail (2).

9. Device according to claim 1, **characterised in that** the overall preloading force is approximately 20 to 30% greater than the overall gripping force.

## Revendications

1. Dispositif d'avance permettant le transport de pièces pas-à-pas dans des machines de production, notamment des presses, comprenant deux rails de transport (1) qui s'étendent suivant une direction d'avance et sont disposés parallèlement et à distance l'un de l'autre et qui sont déplaçables en commun dans un sens et dans l'autre suivant la direction d'avance, ainsi que dans des sens opposés suivant une direction transversale à celle-ci, au moyen d'entraînements correspondants, et au moins un rail auxiliaire (5) qui est disposé parallèlement au premier rail de transport (1) et est relié à celui-ci et qui porte plusieurs organes de serrage (7) qui sont disposés à des distances entre milieux égales de l'un à l'autre suivant la direction d'avance et dont chacun coopère, en vue de saisir une pièce, avec un organe de saisie (7) respectif disposé en regard et associé au second rail de transport, le rail auxiliaire (5) étant disposé de façon à pouvoir se déplacer suivant la direction transversale (B) vis-à-vis du premier rail de transport (1), tandis qu'entre le rail de transport (1) et le rail auxiliaire (5), il est prévu plusieurs agencements à comportement élastique (14) soumis à une précontrainte exerçant leur action suivant la direction transversale (B), **caractérisé en ce que** la force de précontrainte totale commune des agencements à comportement élastique (14) est supérieure à la force de serrage totale de tous les organes de serrage (7) disposés sur le rail auxiliaire (5) et inférieure à une force de surcharge qui pourrait provoquer une surcharge de parties du dispositif d'avance, et **en ce qu'**il est prévu au moins un dispositif capteur (16) qui réagit à un déplacement relatif du rail auxiliaire (5) par rapport au rail de transport (1), se produisant lorsque la force de précontrainte d'un agencement à comportement élastique (14) est dépassée, et qui, lors d'un tel déplacement relatif, provoque au moins une mise à l'arrêt de l'entraînement transversal (4).

2. Dispositif suivant la revendication 1, **caractérisé en ce que**, pour le montage avec possibilité de déplacement du rail auxiliaire (5) vis-à-vis du rail de transport (1), il est prévu deux dispositifs de guidage (9) dont chacun comprend un boîtier de montage (10) relié au rail de transport (1) et une tige de guidage (12) qui peut être déplacée dans celui-ci transversalement au rail de transport (1) et dont une extrémité (12a) qui fait saillie hors du boîtier de montage (10) est reliée d'une manière séparable au rail auxiliaire (5).

3. Dispositif suivant la revendication 2, **caractérisé en ce que** l'agencement à comportement élastique (14) soumis à une précontrainte est disposé dans le boîtier de montage (10) et exerce sur la tige de guidage (12) une force de précontrainte dirigée vers les organes de serrage (7).

4. Dispositif suivant la revendication 3, **caractérisé en ce que** la partie (12c) d'une tige de guidage (12) cylindrique, partie qui est entourée par le boîtier de montage (10) est creuse et l'agencement à comportement élastique (14) est engagé dans cette partie creuse (12c).

5. Dispositif suivant l'une des revendications précédentes, **caractérisé en ce que** l'agencement à comportement élastique (14) est constitué de plusieurs rondelles Belle ville.

6. Dispositif suivant l'une des revendications précédentes, **caractérisé en ce que** la course élastique de l'agencement à comportement élastique (14) et la course de déplacement de la tige de guidage (12) sont supérieures à la somme de la course de commutation et de la course d'arrêt des rails de transport (1, 2).

7. Dispositif suivant l'une des revendications précédentes, **caractérisé en ce qu'**un second rail auxiliaire (6) est disposé parallèlement au second rail de transport (2) et est relié à celui-ci d'une manière séparable, en portant les organes de serrage (8) associés au second rail de transport (2).

8. Dispositif suivant la revendication 7, **caractérisé en ce que** le second rail auxiliaire (6) est relié de façon rigide au second rail de transport (2).

9. Dispositif suivant la revendication 1, **caractérisé en ce que** la force de précontrainte totale est supérieure d'environ 20 à 30% à la force de serrage totale.
